# EUROPEAN PATENT APPLICATION

(11) **EP 3 708 592 A1**
(43) Date of publication of application: **16.09.2020**
(21) Application number: 18876054.0
(22) Date of filing: 02.11.2018
(51) Int. Cl.: C08F 4/6592, C08F 4/642, C08F 4/52, C08F 2/38, C07F 17/00

(54) **TRANSITION METAL COMPOUND FOR OLEFIN POLYMERIZATION CATALYST, OLEFIN POLYMERIZATION CATALYST COMPRISING SAME, AND POLYOLEFIN POLYMERIZED USING SAME**

(30) Priority: 10.11.2017 KR 20170149751
(71) Applicant: Hanwha Solutions Corporation, Jung-gu Seoul 04541 (KR)
(72) Inventor: LEE, Hyun Seung, Daejeon 34209 (KR); PARK, Seong Yeon, Daejeon 34120 (KR); YANG, Hee Ju, Daejeon 34048 (KR); PARK, Na Young, Daejeon 34120 (KR); JEONG, Wook, Daejeon 34049 (KR)
(74) Representative: Glawe, Delfs, Moll
(86) International application number: PCT/KR2018/013250
(87) International publication number: WO 2019/093720

(57) **Abstract**

Provided is a transition metal compound, represented by chemical formula 1, for an olefin polymerization catalyst. The details of chemical formula 1 are the same as those defined in the specification.

## Description

### FIELD

The present invention relates to a transition metal compound for an olefin polymerization catalyst, an olefin polymerization catalyst comprising the same and a polyolefin polymerized using the same.

### BACKGROUND

A metallocene catalyst, which is one of the catalysts used to polymerize olefins, is a compound, in which a ligand such as a cyclopentadienyl group, an indenyl group, and a cycloheptadienyl group is coordinate bonded to a transition metal or a transition metal halogen compound, and has a sandwich structure in its basic form.

The metallocene catalyst is a single-site catalyst comprising the metallocene compound and a cocatalyst such as methylaluminoxane. Polymers polymerized with the metallocene catalyst have a narrow molecular weight distribution, a uniform distribution of the comonomer and a copolymerization activity higher than that of the Ziegler-Natta catalyst.

However, since there are still many difficulties in commercial use, a preparation technique based on the development of a catalyst having high stability even at a high temperature and excellent reactivity with an olefin and economic efficiency is required.

### SUMMARY

The problem to be solved by the present invention is to provide a transition metal compound for an olefin polymerization catalyst, an olefin polymerization catalyst having high stability even at high temperature and excellent reactivity with an olefin, including the same, and a polyolefin polymerized using the same, which has excellent properties such as low density and high molecular weight.

The problems of the present invention are not limited to the technical problems mentioned above, and other technical problems that are not mentioned will be clearly understood by those skilled in the art from the following description.

A transition metal compound for an olefin polymerization catalyst according to an embodiment of the present invention for solving the above problems is represented by the following chemical formula 1.

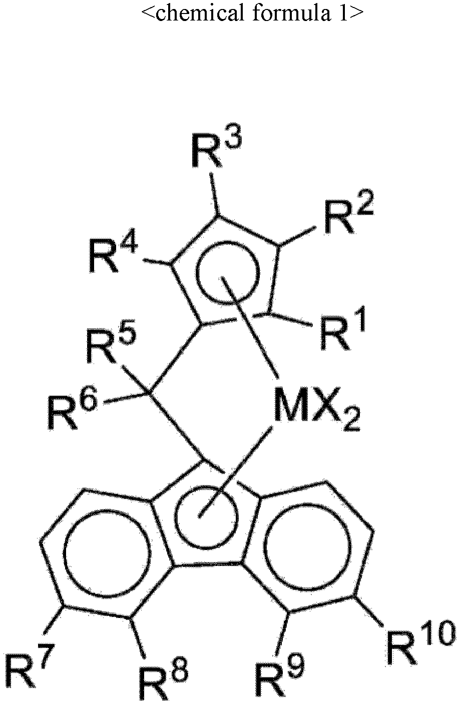

In the chemical formula 1, M is titanium (Ti), zirconium (Zr) or hafnium (Hf), X is each independently halogen, C₁₋₂₀ alkyl, C₂₋₂₀ alkenyl, C₂₋₂₀ alkynyl, C₆₋₂₀ aryl, C₁₋₂₀ alkyl C₆₋₂₀ aryl, C₆₋₂₀ aryl C₁₋₂₀ alkyl, C₁₋₂₀ alkylamido, C₆₋₂₀ arylamido or C₁₋₂₀ alkylidene, R¹ to R⁴ are each independently hydrogen, C₁₋₂₀ alkyl, C₂₋₂₀ alkenyl, C₂₋₂₀ alkynyl, C₆₋₂₀ aryl, C₁₋₂₀ alkyl C₆₋₂₀ aryl, C₆₋₂₀ aryl C₁₋₂₀ alkyl, C₁₋₂₀ alkylamido, C₆₋₂₀ arylamido or C₁₋₂₀ alkylidene, R⁵ and R⁶ are each independently C₁₋₂₀ alkyl, C₂₋₂₀ alkenyl, C₂₋₂₀ alkynyl, C₆₋₂₀ aryl, C₁₋₂₀ alkyl C₆₋₂₀ aryl, C₆₋₂₀ aryl C₁₋₂₀ alkyl, C₁₋₂₀ alkylamido, C₆₋₂₀ arylamido or C₁₋₂₀ alkylidene, or linked to each other to form a substituted or unsubstituted C₄₋₂₀ ring, R⁷ to R¹⁰ form a substituted or unsubstituted C₄₋₂₀ ring, in which two adjacent ones are linked to each other.

An olefin polymerization catalyst according to an embodiment of the present invention for solving the above other problems comprises a transition metal compound represented by the following chemical formula 1 and a cocatalyst compound.

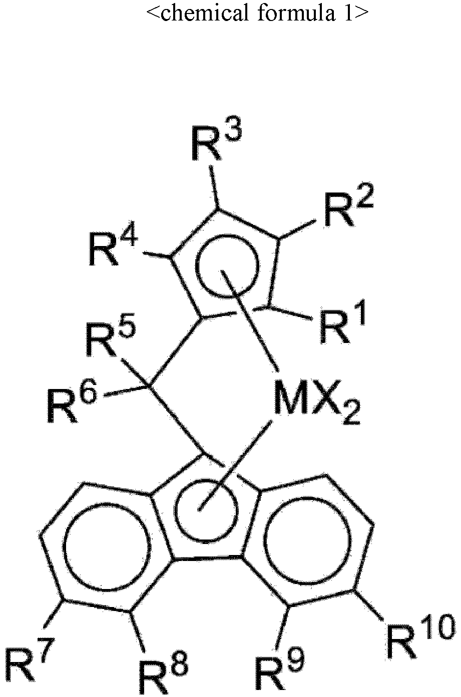

In the chemical formula 1, M is titanium (Ti), zirconium (Zr) or hafnium (Hf), X is each independently halogen, C₁₋₂₀ alkyl, C₂₋₂₀ alkenyl, C₂₋₂₀ alkynyl, C₆₋₂₀ aryl, C₁₋₂₀ alkyl C₆₋₂₀ aryl, C₆₋₂₀ aryl C₁₋₂₀ alkyl, C₁₋₂₀ alkylamido, C₆₋₂₀ arylamido or C₁₋₂₀ alkylidene, R¹ to R⁴ are each independently hydrogen, C₁₋₂₀ alkyl, C₂₋₂₀ alkenyl, C₂₋₂₀ alkynyl, C₆₋₂₀ aryl, C₁₋₂₀ alkyl C₆₋₂₀ aryl, C₆₋₂₀ aryl C₁₋₂₀ alkyl, C₁₋₂₀ alkylamido, C₆₋₂₀ arylamido or C₁₋₂₀ alkylidene, R⁵ and R⁶ are each independently C₁₋₂₀ alkyl, C₂₋₂₀ alkenyl, C₂₋₂₀ alkynyl, C₆₋₂₀ aryl, C₁₋₂₀ alkyl C₆₋₂₀ aryl, C₆₋₂₀ aryl C₁₋₂₀ alkyl, C₁₋₂₀ alkylamido, C₆₋₂₀ arylamido or C₁₋₂₀ alkylidene, or linked to each other to form a substituted or unsubstituted C₄₋₂₀ ring, R⁷ to R¹⁰ form a substituted or unsubstituted C₄₋₂₀ ring, in which two adjacent ones are linked to each other.

A polyolefin according to an embodiment of the present invention for solving the above other problems is formed by polymerizing an olefin monomer under the olefin polymerization catalyst.

Specific details of other embodiments are included in the detailed description and drawings.

Embodiments according to the present invention have at least the following effects.

The olefin polymerization catalyst having high stability even at high temperatures and reactivity with an olefin can be prepared by including the transition metal compound of the present invention, and the polyolefin polymerized using the same can have excellent properties such as low density and high molecular weight.

Further, the olefin polymerization catalyst comprising the transition metal compound of the present invention has a high synthetic yield and can be easily prepared by an economical method, and thus has excellent commercial practicality.

Effects of the embodiments according to the present invention are not limited by the contents illustrated above, and more various effects are included in the present specification.

### DETAILED DESCRIPTION

Advantages and features of the present invention and a method of achieving them will be clarified with reference to embodiments described below in detail together with the accompanying drawing. However, the present invention is not limited to the embodiments disclosed below, but will be implemented in various different forms, and the present embodiments are only provided to allow the disclosure of the present invention to be complete, and fully inform the ordinary knowledge in the technical field to which the present invention pertains on the scope of the invention, and the invention is only defined by the scope of the claims.

In this specification, the term "C_{A-B}" means "the number of carbons is A or more and B or less," and the term "A to B" mean "A or more and B or less," and in the term "substituted or unsubstituted," "substituted" means that "at least one hydrogen of a hydrocarbon compound or hydrocarbon derivative is substituted with halogen, C₁₋₂₀ alkyl, C₂₋₂₀ alkenyl, C₂₋₂₀ alkynyl, C₆₋₂₀ aryl, C₁₋₂₀ alkyl C₆₋₂₀ aryl, C₆₋₂₀ aryl C₁₋₂₀ alkyl, C₁₋₂₀ alkylamido, C₆₋₂₀ arylamido or C₁₋₂₀ alkylidene," and "unsubstituted" means "at least one hydrogen of a hydrocarbon compound or hydrocarbon derivative is unsubstituted with halogen, C₁₋₂₀ alkyl, C₂₋₂₀ alkenyl, C₂₋₂₀ alkynyl, C₆₋₂₀ aryl, C₁₋₂₀ alkyl C₆₋₂₀ aryl, C₆₋₂₀ aryl C₁₋₂₀ alkyl, C₁₋₂₀ alkylamido, C₆₋₂₀ arylamido or C₁₋₂₀ alkylidene."

The transition metal compound for an olefin polymerization catalyst according to an embodiment of the present invention may be represented by the following chemical formula 1.

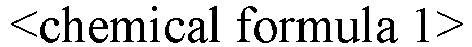

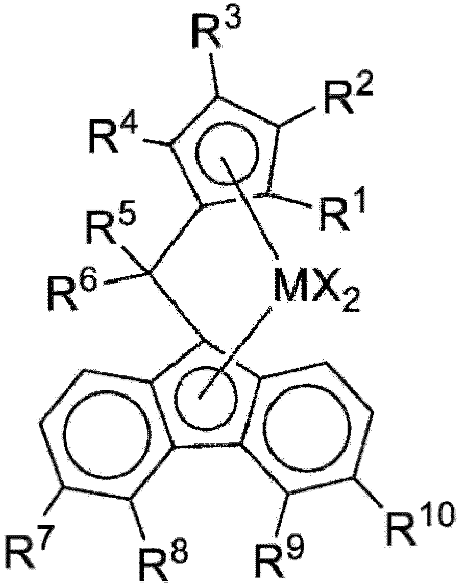

In the chemical formula 1, M may be titanium (Ti), zirconium (Zr), or hafnium (Hf). Specifically, M may be zirconium or hafnium.

X may be each independently halogen, C₁₋₂₀ alkyl, C₂₋₂₀ alkenyl, C₂₋₂₀ alkynyl, C₆₋₂₀ aryl, C₁₋₂₀ alkyl C₆₋₂₀ aryl, C₆₋₂₀ aryl C₁₋₂₀ alkyl, C₁₋₂₀ alkylamido, C₆₋₂₀ arylamido or C₁₋₂₀ alkylidene. Specifically, X may be each independently halogen or C₁₋₂₀ alkyl. More specifically, X may be each independently chlorine (Cl) or methyl.

R¹ to R⁴ may each independently be hydrogen, C₁₋₂₀ alkyl, C₂₋₂₀ alkenyl, C₂₋₂₀ alkynyl, C₆₋₂₀ aryl, C₁₋₂₀ alkyl C₆₋₂₀ aryl, C₆₋₂₀ aryl C₁₋₂₀ alkyl, C₁₋₂₀ alkylamido, C₆₋₂₀ arylamido or C₁₋₂₀ alkylidene. Specifically, R1 to R4 may be each hydrogen.

R⁵ and R⁶ may be each independently C₁₋₂₀ alkyl, C₂₋₂₀ alkenyl, C₂₋₂₀ alkynyl, C₆₋₂₀ aryl, C₁₋₂₀ alkyl C₆₋₂₀ aryl, C₆₋₂₀ aryl C₁₋₂₀ alkyl, C₁₋₂₀ alkylamido, C₆₋₂₀ arylamido or C₁₋₂₀ alkylidene, or may be linked to each other to form a substituted or unsubstituted C₄₋₂₀ ring. Specifically, R⁵ and R⁶ may be each independently C₁₋₂₀ alkyl or C₆₋₂₀ aryl, or may be linked to each other to form a substituted or unsubstituted aliphatic C₄₋₂₀ ring. More specifically, R⁵ and R⁶ may be each independently methyl or phenyl or linked to each other to form an aliphatic C4 ring.

R⁷ to R¹⁰ may form a substituted or unsubstituted C₄₋₂₀ ring, in which two adjacent ones are linked to each other. Specifically, R⁷ to R¹⁰ may form a substituted or unsubstituted aromatic C₅₋₂₀ ring, in which two adjacent ones are linked to each other. More specifically, R⁷ to R¹⁰ may form a substituted or unsubstituted aromatic C₆ or C₁₀ ring, in which two adjacent ones are linked to each other. Two adjacent ones of R⁷ to R¹⁰ may mean R⁷ and R⁸ or R⁹ and R¹⁰.

The aromatic C₆ or C₁₀ ring may be substituted with one or more of hydrogen, halogen, C₆₋₂₀ aryl, C₁₋₂₀ alkylsilyl, C₁₋₂₀ alkyloxy and C₁₋₂₀ alkylamino. Specifically, the halogen may be fluorine (F), the C₆₋₂₀ aryl may be phenyl, the C₁₋₂₀ alkylsilyl may be trimethylsilyl (-SiMe₃), and the C₁₋₂₀ alkyloxy may be methyloxy (methyloxy[methoxy],-OMe), and the C₁₋₂₀ alkylamino may be dimethylamino (-NMe₂).

Specifically, the transition metal compound may be at least one of the following chemical formulas 1-1 to 1-12.

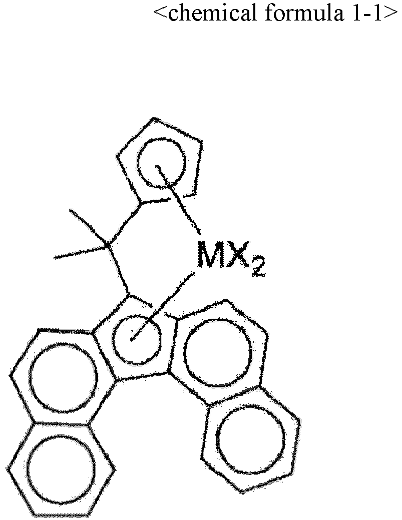

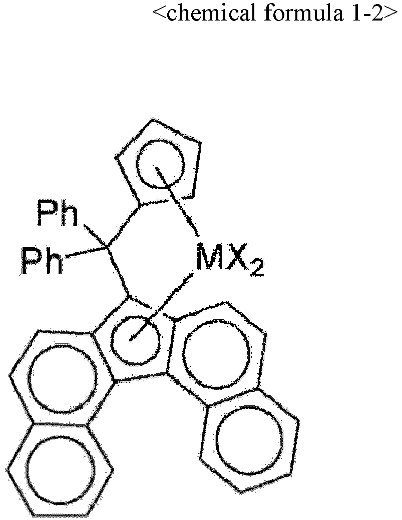

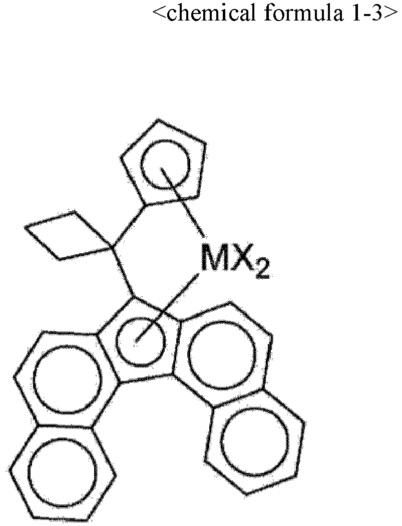

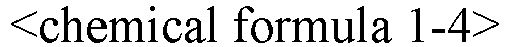

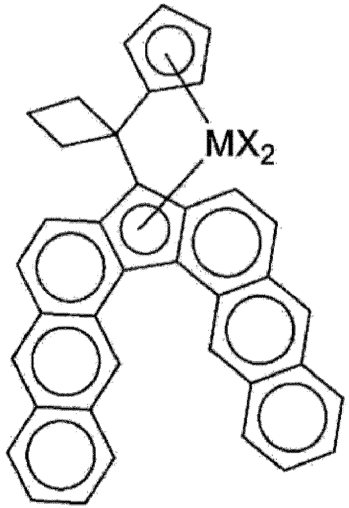

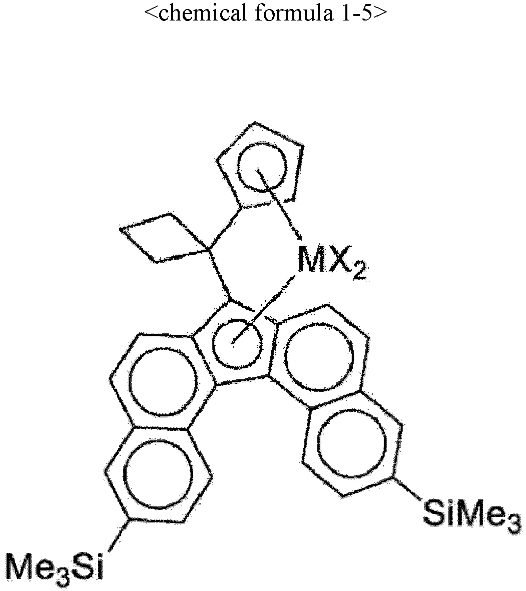

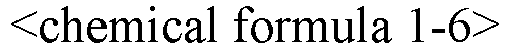

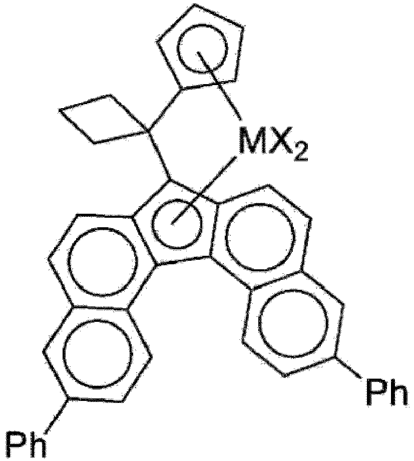

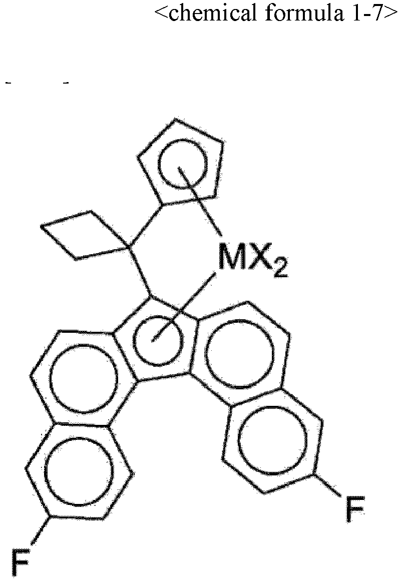

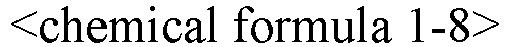

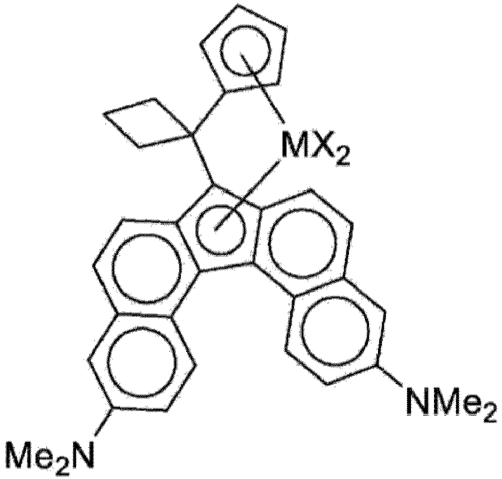

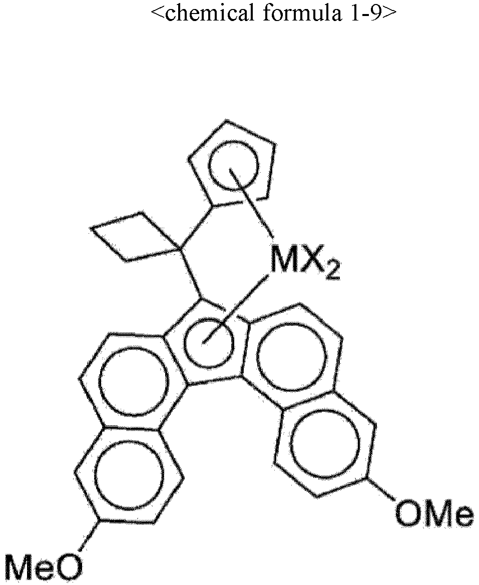

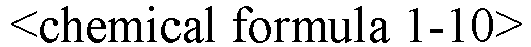

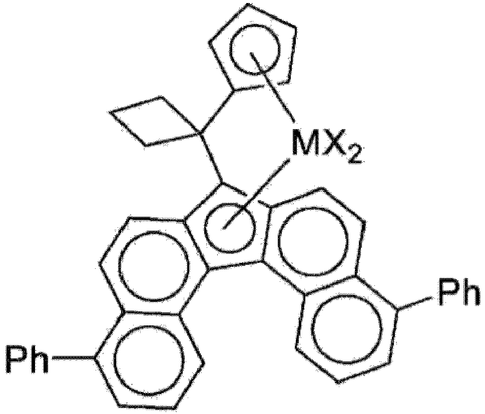

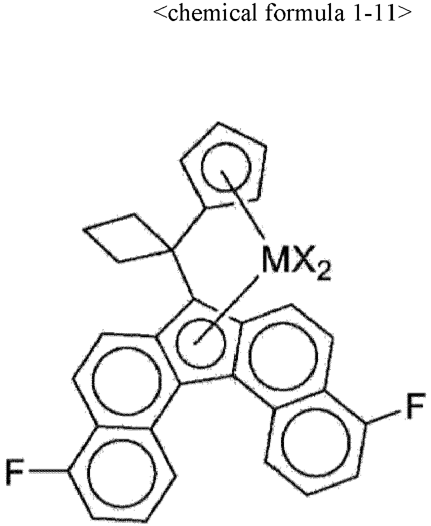

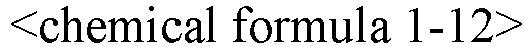

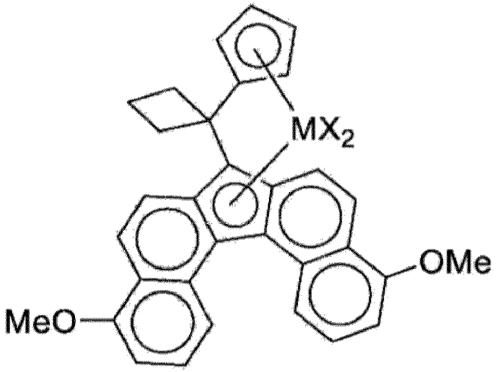

In the chemical formulas 1-1 to 1-12, M may be zirconium or hafnium, and X may each independently be halogen or C₁₋₂₀ alkyl.

In an exemplary embodiment, the transition metal compound may be at least one of the following chemical formulas A to D.

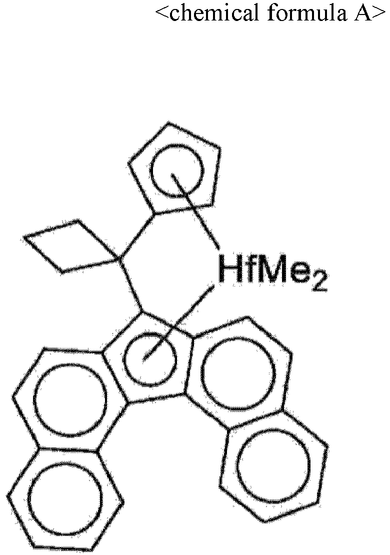

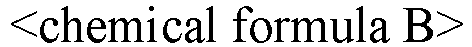

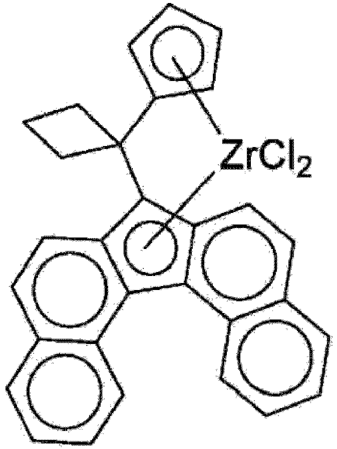

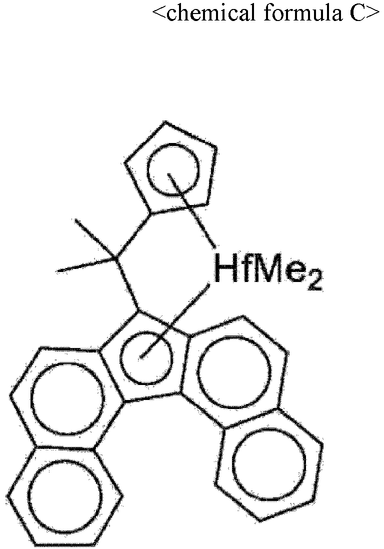

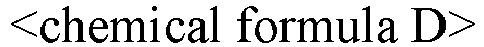

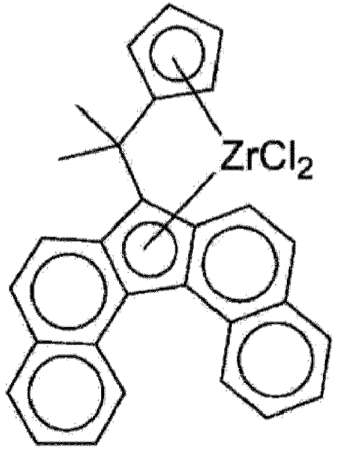

The olefin polymerization catalyst according to an embodiment of the present invention may include one or more of the transition metal compounds illustrated above and a cocatalyst compound.

The cocatalyst compound may include one or more of a compound represented by the following chemical formula I, a compound represented by the chemical formula II, and a compound represented by the chemical formula III.

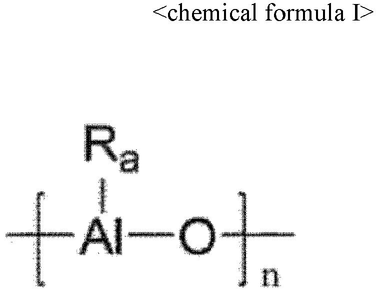

In the chemical formula I, n may be an integer of 2 or more, and Rₐ may be a halogen atom, a C₁₋₂₀ hydrocarbon group, or a C₁₋₂₀ hydrocarbon group substituted with halogen. Specifically, the Rₐ may be methyl, ethyl, n-butyl or isobutyl, but is not limited thereto.

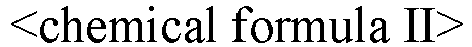

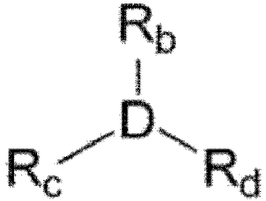

In the chemical formula II, D is aluminum (Al) or boron (B), and R_{b}, R_{c} and R_{d} may each independently be a halogen atom, a C₁₋₂₀ hydrocarbon group, a C₁₋₂₀ hydrocarbon group substituted with halogen, or a C₁₋₂₀ alkoxy group. Specifically, when the D is aluminum, the R_{b}, R_{c} and R_{d} may each independently be methyl or isobutyl, and when the D is boron, the R_{b}, R_{c} and R_{d} may each be pentafluorophenyl, but are not limited thereto.

<chemical formula III> [L-H]⁺[Z(A)₄]⁻ or [L]⁺[Z(A)₄]⁻

In the chemical formula III, L is a neutral or cationic Lewis base, [L-H]⁺ and [L]⁺ are Brønsted acids, Z is a group 13 element, and A may each independently be a substituted or unsubstituted C₆₋₂₀ aryl group or a substituted or unsubstituted C₁₋₂₀ alkyl group. Specifically, the [L-H]⁺ may be a dimethylanilinium cation, the [Z(A)₄]⁻ may be [B(C₆F₅)₄]⁻, and the [L]⁺ may be [(C₆H₅)₃C]⁺, but is not limited thereto.

The olefin polymerization catalyst may further include a carrier.

The carrier is not particularly limited as long as it can carry a transition metal compound for an olefin polymerization catalyst and a cocatalyst compound. In an exemplary embodiment, the carrier may be carbon, silica, alumina, zeolite, magnesium chloride, or the like.

As a method of carrying the transition metal compound for the olefin polymerization catalyst and the cocatalyst compound on the carrier, a physical adsorption method or a chemical adsorption method can be used.

In an exemplary embodiment, the physical adsorption method may be a method, in which a solution of dissolving a transition metal compound for a olefin polymerization catalyst is contacted with a carrier and then dried, a method, in which a solution of dissolving a transition metal compound for a olefin polymerization catalyst and a cocatalyst compound is contacted with a carrier and then dried, or a method, in which a solution of dissolving a transition metal compound for an olefin polymerization catalyst is contacted with a carrier and then dried, and a carrier carrying a transition metal compound for an olefin polymerization catalyst is prepared, and separately, a solution of dissolving a cocatalyst compound is contacted with a carrier and then dried to prepare a carrier carrying the cocatalyst compound, and then mixing them.

In an exemplary embodiment, the chemical adsorption method may be a method of first carrying a cocatalyst compound on a surface of a carrier, and carrying a transition metal compound for an olefin polymerization catalyst in a cocatalyst compound, or a method of covalently bonding a functional group on the surface of the carrier (e.g., a hydroxy group (-OH) on the silica surface in the case of silica) with a catalyst compound.

The total amount of the carrying amount of the main catalyst compound including the transition metal compound may be 0.001mmol to 1mmol based on 1g of the carrier, and the carrying amount of the cocatalyst compound may be 2mmol to 15mmol based on 1g of the carrier.

However, such a carrier is not necessarily included, and whether or not to use it can be appropriately selected as necessary.

The polyolefin may be formed by polymerizing the olefin-based monomer under the olefin polymerization catalyst of the present invention as described above.

The polyolefin may be, for example, a homopolymer or a copolymer polymerized by polymerization reactions such as free radical, cationic, coordination, condensation and addition, but is not limited thereto.

In an exemplary embodiment, the polyolefin may be prepared by gas phase polymerization, solution polymerization or slurry polymerization. Examples of the solvent that can be used when the polyolefin is prepared by solution polymerization or slurry polymerization include C₅₋₁₂ aliphatic hydrocarbon solvents such as pentane, hexane, heptane, nonane, decane and isomers thereof; aromatic hydrocarbon solvents such as toluene and benzene; hydrocarbon solvents substituted with chlorine atoms such as dichloromethane and chlorobenzene; and mixtures of them, and the like, but are not limited thereto.

The olefin-based monomer may be one or more selected from the group comprising C₂₋₂₀ α-olefin, C₁₋₂₀ diolefin, C₃₋₂₀ cyclo-olefin and C₃₋₂₀ cyclodiolefin.

In an exemplary embodiment, the olefin-based monomer may be ethylene, propylene, 1-butene, 1-pentene, 4-methyl-1-pentene, 1-hexene, 1-heptene, 1-octene, 1-decene, 1-undecene, 1-dodecene, 1-tetradecene and 1-hexadecene, and the like, and the polyolefin may be a homopolymer comprising only one of the olefin-based monomers illustrated above or a copolymer comprising two or more.

Preferably, the polyolefin may be a copolymer, in which ethylene and 1-octene are copolymerized, but is not limited thereto.

The olefin polymerization catalyst comprising the transition metal compound of the present invention has stability at high temperature and is excellent in reactivity with olefins, particularly α-olefins, so it is easy to polymerize olefins, resulting in high yield of polyolefins, excellent economic efficiency. Further, it is possible to prepare low density, high molecular weight polyolefins.

This may be particularly due to the relatively rich electrons when two adjacent ones of R⁷ to R¹⁰ of the transition metal compounds of the present invention are linked to each other to form a substituted or unsubstituted aromatic C₆ or C₁₀ ring, thereby improving the (co) polymerization reactivity of the olefin, but is not limited thereto.

Hereinafter, specific preparation examples of the compounds represented by the chemical formulas A to D among the transition metal compounds for the olefin polymerization catalyst of the present invention will be described.

### <Preparation Example 1> Preparation of the compound of chemical formula A

### Preparation Example 1-1: Preparation of 1,1'-binaphthyl-2,2'-dicarboxylic acid

t-BuLi (15.8 g, 41.1 mmol, 1.7 M in pentane) was added at -78 °C to a solution of 2,2'-dibromo-1,1'-binaphthyl (3.85 g, 9.34 mmol) diluted in THF (40 mL), and then the mixture was stirred for 1 hour. CO₂ gas was injected at -78 °C for 3 minutes, and then the temperature was gradually raised to room temperature and stirred for 12 hours. After the reaction was terminated by adding 10% HCl at 0 °C, THF was removed under vacuum. The organic layer was separated by extraction with ethyl acetate, and 3.49 g (quant.) of 2,2'-dibromo-1,1'-binaphthyl, which is a white solid compound having the following ¹H-NMR spectrum, was obtained by recrystallization with chloroform.

¹H-NMR (DMSO-d6, 300 MHz): δ 12.4 (s, 2H), 8.11-8.00 (m, 6H), 7.54 (t, 2H), 7.27 (t, 2H), 6.87 (d, 2H).

### Preparation Example 1-2: Preparation of 7H-dibenzo[c,g]fluoren-7-one

1,1'-binaphthyl-2,2'-dicarboxylic acid (3.02 g, 8.82 mmol) prepared in the Preparation Example 1-1 and acetic anhydride (30 mL) were mixed and stirred at 140 °C for 1 hour 30 minutes. After removing acetic anhydride under vacuum, the remaining reaction solution was stirred at 300 °C for 3 hours. After filtering with dichloromethane, 1.17 g (47%) of 7H-dibenzo[c,g]fluoren-7-one, which is a red solid compound having the following ¹H-NMR spectrum, was obtained through column chromatography (hexane : dichloromethane = 1 : 1, v/v).

¹H-NMR (CDCl3, 300 MHz): δ 8.37-8.33 (m, 2H), 7.92-7.87 (m, 2H), 7.83 (d, 2H), 7.77 (d, 2H), 7.60-7.55 (m, 4H).

### Preparation Example 1-3: Preparation of 7H-dibenzo[c,g]fluorene

The solution, in which 7H-dibenzo[c,g]fluoren-7-one (641 mg, 2.29 mmol), N2H4•H20 (2.86 g, 57.2 mmol) prepared in the Preparation Example 1-2 and KOH (385 mg, 6.86 mmol) were dispersed in diethylene glycol (30 mL), was stirred at 170 °C for 3 hours. The reaction was terminated by adding 10% HCl at 0 °C and the resulting solid was filtered. Drying under vacuum gave 603 mg (99%) of 7H-dibenzo[c,g]fluorine, which is a dark brown solid compound having the following ¹H-NMR spectrum.

¹H-NMR (CDCl3, 300 MHz): δ 8.73 (d, 2H), 7.97 (d, 2H), 7.86 (d, 2H), 7.73 (d, 2H), 7.59-7.48 (m, 4H), 4.13 (s, 2H).

### Preparation Example 1-4: Preparation of (7H-dibenzo[c,g]fluorene) lithium

n-BuLi (980 mg, 2.30 mmol, 1.6 M in Hexane) was slowly added at -30 °C to a solution, in which 7-dibenzo[c,g]fluorene (585 mg, 2.20 mmol) prepared in the Preparation Example 1-3 was diluted in diethyl ether (50 mL), and the temperature was gradually raised to room temperature and stirred for 12 hours. The resulting solid was filtered and dried under vacuum to obtain 598 mg (100%) of (7H-dibenzo[c,g]fluorene) lithium, which is an ocher solid compound.

### Preparation Example 1-5: Preparation of 9-[1-(2,4-Cyclopentadien-1-yl)-1-cyclobutyl]-7H-dibenzo[c,g]fluorene

A solution of 5-cyclobutylidene-1,3-cyclopentadiene (518 mg, 4.38 mmol) diluted in diethyl ether (10 mL) was slowly added at -30 °C to a solution, in which (7H-dibenzo[c, g]fluorene) lithium (596 mg, 2.19 mmol) prepared in the Preparation Example 1-4 was dispersed in diethyl ether (35 mL), and the temperature was gradually raised to room temperature and stirred for 3 days. After completion of the reaction, the organic layer was separated by extraction with diethyl ether and aqueous NH₄Cl. Recrystallization with Hexane gave 654 mg (78%) of 9-[1-(2,4-Cyclopentadien-1-yl)-1-cyclobutyl]-7H-dibenzo[c,g] fluorene, which is a white solid compound having the following ¹H-NMR spectrum.

¹H-NMR (CDCl3, 300 MHz): δ 8.56-8.47 (m, 2H), 7.95-7.89 (m, 2H), 7.79-7.76 (m, 4H), 7.50-7.44 (m, 4H), 5.96-5.81 (m, 1H), 5.74-5.67 (m, 1H), 5.59-5.50 (m, 1H), 4.42 (d, 1H), 2.99-2.79 (m, 2H), 2.58-2.44 (m, 2H), 2.39 -2.02 (m, 2H), 2.01-1.94 (m, 2H).

### Preparation Example 1-6: Preparation of Cyclobutylidene[(cyclopentadienyl)-(7H-dibenzo[c, g]fluorenyl)]dilithium

n-BuLi (741 mg, 1.74 mmol, 1.6 M in Hexane) was slowly added at -30 °C to a solution, in which 9-[1-(2,4-Cyclopentadien-1-yl)-1-cyclobutyl]-7H-dibenzo[c,g] fluorene (319 mg, 0.83 mmol) prepared in the Preparation Example 1-5 was diluted in diethyl ether (35 mL), and the temperature was gradually raised to room temperature and stirred for 12 hours. The resulting solid was filtered and dried under vacuum to obtain 368 mg (quant., ether adduct) of Cyclobutylidene [(cyclopentadienyl)-(7H-dibenzo[c,g]fluorenyl)] dilithium, which is an ocher solid compound.

### Preparation Example 1-7: Preparation of Cyclobutylidene[(cyclopentadienyl)-(7H-dibenzo[c,g]fluorenyl)]hafnium dichloride

A solution of HfCl₄ (277 mg, 0.86 mmol) dispersed in toluene (5 mL) was slowly added at -30 °C to a solution, in which Cyclobutylidene [(cyclopentadienyl)-(7H-dibenzo[c,g]fluorenyl)] dilithium (342 mg, 0.86 mmol) prepared in the Preparation Example 1-6 was dispersed in toluene (40 mL), and the temperature was gradually raised to room temperature and stirred for 12 hours. After completion of the reaction, it was extracted with toluene and filtered. After removing toluene under vacuum, washing with hexane gave 335 mg (61%) of Cyclobutylidene [(cyclopentadienyl)-(7H-dibenzo[c,g]fluorenyl)] hafnium dichloride, which is a yellow solid compound having the following ¹H-NMR spectrum.

¹H-NMR (C6D6, 300 MHz): δ 9.10 (d, 2H), 7.69 (d, 2H), 7.39-7.24 (m, 8H), 6.02 (t, 2H), 5.44 (t, 2H), 2.90- 2.77 (m, 2H), 2.58 (t, 2H), 2.26-2.14 (m, 1H), 1.88-1.74 (m, 1H).

### Preparation Example 1-8: Preparation of Cyclobutylidene[(cyclopentadienyl)-(7H-dibenzo[c,g]fluorenyl)]hafnium dimethyl

A solution of MeMgBr (448 mg, 1.30 mmol, 3.0 M in diethyl ether) diluted in toluene (5 mL) was slowly added at -30 °C to a solution, in which Cyclobutylidene [(cyclopentadienyl)-(7H-dibenzo[c,g]fluorenyl)] hafnium dichloride (273 mg, 0.43 mmol) prepared in the Preparation Example 1-7 was dispersed in toluene (20 mL), and stirred for 4 hours while refluxing at 70 °C. After completion of the reaction, it was extracted with toluene and filtered. After removing toluene under vacuum, washing with hexane gave 182 mg (71%) of Cyclobutylidene [(cyclopentadienyl)-(7H-dibenzo[c,g]fluorenyl)] hafnium dimethyl (the compound of the following chemical formula A), which is a yellow solid compound having the following ¹H-NMR spectrum.

¹H-NMR (C6D6, 300 MHz): δ 9.22 (d, 2H), 7.73 (d, 2H), 7.46-7.22 (m, 8H), 6.03 (t, 2H), 5.40 (t, 2H), 2.90- 2.80 (m, 2H), 2.68-2.58 (m, 2H), 2.34-2.18 (m, 1H), 1.92-1.84 (m, 1H), -1.37 (s, 6H).

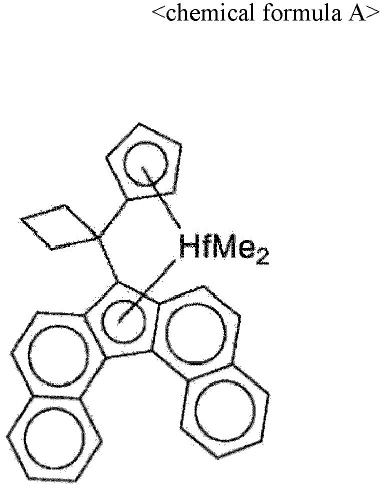

### <Production Example 2> preparation of the compound of chemical formula B

### Preparation Example 2-1: Preparation of Cyclobutylidene[(cyclopentadienyl)-(7H-dibenzo[c,g]fluorenyl)]zirconium dichloride

A solution of ZrCl₄ (74 mg, 0.32 mmol) dispersed in toluene (3 mL) was slowly added at -30 °C to a solution, in which Cyclobutylidene [(cyclopentadienyl)-(7H-dibenzo[c,g]fluorenyl)] dilithium (127 mg, 0.32 mmol) prepared in the Preparation Example 1-6 was dispersed in toluene (10 mL), and the temperature was gradually raised to room temperature and stirred for 12 hours. After completion of the reaction, it was extracted with toluene and filtered. 128 mg (74%) of Cyclobutylidene [(cyclopentadienyl)-(7H-dibenzo[c,g]fluorenyl)] zirconium dichloride (the compound of the following chemical formula B), which is an orange solid compound having the following ¹H-NMR spectrum, was obtained by washing with hexane after removing toluene under vacuum.

¹H-NMR (C6D6, 300 MHz): δ 9.15 (d, 2H), 7.72 (d, 2H), 7.42-7.30 (m, 8H), 6.11 (t, 2H), 5.52 (t, 2H), 2.92- 2.82 (m, 2H), 2.60 (t, 2H), 2.28-2.16 (m, 1H), 1.92-1.82 (m, 1H).

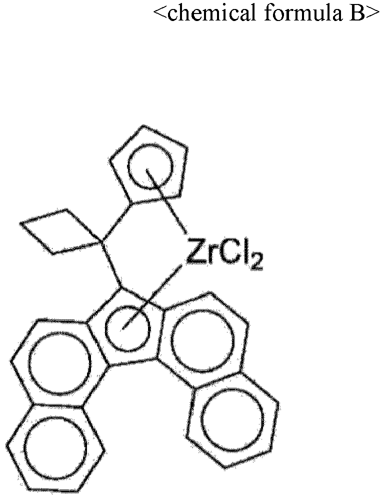

### <Preparation Example 3> Preparation of the compound of chemical formula C

### Preparation Example 3-1: Preparation of 2,2-[(cyclopentadienyl)-(7H-dibenzo[c,g]fluorenyl)]propane

A solution of 6,6-dimethylfulvene (522 mg, 4.92) diluted in diethyl ether (5 mL) was slowly added at -78 °C to a solution, in which (7H-dibenzo[c,g]fluorene) lithium (893 mg, 3.28 mmol) prepared in the Preparation Example 1-4 was dispersed in diethyl ether (35 mL), and the temperature was gradually raised to room temperature and stirred for 12 hours. After completion of the reaction, the organic layer was separated by extraction with diethyl ether and aqueous NH₄Cl. 907 mg (74%) of 2,2-[(cyclopentadienyl)-(7H-dibenzo[c,g]fluorenyl)] propane, which is a pale yellow solid compound having the following ¹H-NMR spectrum, was obtained through column chromatography (hexane 100%).

¹H-NMR (CDCl3, 300 MHz): δ 8.61 (d, 2H), 7.91 (d, 2H), 7.74-7.66 (m, 2H), 7.52-7.46 (m, 4H), 7.41 (d, 1H), 7.32 (d, 1H), 7.00-6.64 (m, 1H), 6.57-6.45 (m, 1H), 6.16-5.87 (m, 1H), 4.33 (d, 1H), 3.24-3.08 (m, 2H), 1.08 (s, 3H), 1.07 (s, 3H).

### Preparation Example 3-2: Preparation of Isopropylidene [(cyclopentadienyl)-(7H-dibenzo[c, g]fluorenyl)]dilithium

n-BuLi (1.24 mg, 2.93 mmol, 1.6 M in Hexane) was slowly added at -30 °C to a solution, in which 2,2-[(cyclopentadienyl)-(7H-dibenzo [c, g] fluorenyl)] propane (519 mg, 1.39 mmol) prepared in the Preparation Example 3-1 was diluted in diethyl ether (10 mL), and the temperature was gradually raised to room temperature and stirred for 12 hours. The resulting solid was filtered and dried under vacuum to obtain 600 mg (quant., ether adduct) of Isopropylidene [(cyclopentadienyl)-(7H-dibenzo[c,g]fluorenyl)] dilithium, which is a yellow solid compound.

### Preparation Example 3-3: Preparation of Isopropylidene[(cyclopentadienyl)-(7H-dibenzo[c,g]fluorenyl)]hafnium dichloride

A solution of HfCl₄ (472 mg, 1.47 mmol) dispersed in toluene (10 mL) was slowly added at -30 °C to a solution, in which Isopropylidene [(cyclopentadienyl)-(7H-dibenzo[c,g]fluorenyl)] dilithium (566 mg, 1.47 mmol) prepared in the Preparation Example 3-2 was dispersed in toluene (40 mL), and the temperature was gradually raised to room temperature and stirred for 12 hours. After completion of the reaction, it was extracted with toluene and filtered. After removing toluene under vacuum, washing with hexane gave 549 mg (60%) of Isopropylidene [(cyclopentadienyl)-(7H-dibenzo[c,g]fluorenyl)] hafnium dichloride, which is a yellow solid compound having the following ¹H-NMR spectrum.

¹H-NMR (CDCl3, 300 MHz): δ 8.84 (d, 2H), 7.95 (d, 2H), 7.88-7.82 (m, 2H), 7.61-7.54 (m, 4H), 7.49 (d, 2H), 6.30 (t, 2H), 5.88 (t, 2H), 2.48 (s, 6H).

### Preparation Example 3-4: Preparation of Isopropylidene[(cyclopentadienyl)-(7H-dibenzo[c,g]fluorenyl)]hafnium dimethyl

A solution of MeMgBr (468 mg, 1.36 mmol, 3.0 M in diethyl ether) diluted in toluene (2 mL) was slowly added at -30 °C to a solution, in which Isopropylidene [(cyclopentadienyl)-(7H-dibenzo[c,g]fluorenyl)] hafnium dichloride (400 mg, 0.65 mmol) prepared in the Preparation Example 3-3 was dispersed in toluene (20 mL), and stirred for 2 hours while refluxing at 70 °C. After completion of the reaction, it was extracted with toluene and filtered. 241 mg (64%) of Isopropylidene [(cyclopentadienyl)-(7H-dibenzo[c,g]fluorenyl)] hafnium dimethyl (the compound of the following chemical formula C), which is a yellow solid compound having the following ¹H-NMR spectrum, was obtained by washing with hexane after removing toluene under vacuum.

¹H-NMR (CDCl3, 300 MHz): δ 8.92 (d, 2H), 7.84 (t, 4H), 7.60-7.46 (m, 4H), 7.41 (d, 2H), 6.23 (t, 2H), 5.66 (t, 2H), 2.26 (s, 6H), -1.82 (s, 6H).

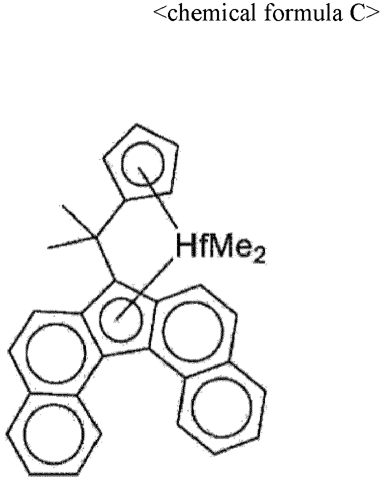

### <Production Example 4> Preparation of the compound of chemical formula D

### Preparation Example 4-1: Preparation of Isopropylidene[(cyclopentadienyl)-(7H-dibenzo[c,g]fluorenyl)]zirconium dichloride

A solution of ZrCl₄ (176 mg, 0.46 mmol) dispersed in toluene (5 mL) was slowly added to at -30 °C to a solution, in which Isopropylidene [(cyclopentadienyl)-(7H-dibenzo[c,g]fluorenyl)] dilithium prepared in the Preparation Example 3-2 was dispersed in toluene (20 mL), and the temperature was gradually raised to room temperature and stirred for 12 hours. After completion of the reaction, it was extracted with toluene and filtered. 107 mg (44%) of Isopropylidene [(cyclopentadienyl)-(7H-dibenzo[c,g]fluorenyl)] zirconium dichloride (the compound of the following chemical formula D), which is a red-brown solid compound having the following ¹H-NMR spectrum, was obtained by washing with hexane after removing toluene under vacuum.

¹H-NMR (CDCl3, 300 MHz): δ 8.87 (d, 2H), 7.95-7.84 (m, 4H), 7.62-7.50 (m, 6H), 6.37 (t, 2H), 5.94 (t, 2H), 2.48 (s, 6 H).

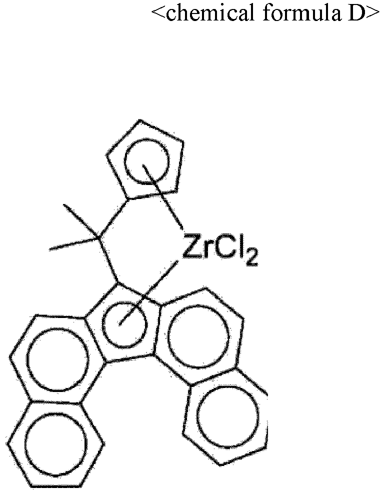

### <Preparation Example 5> Synthesis of ethylene and 1-octene copolymer using the olefin polymerization catalyst comprising the compound of chemical formula A

Ethylene and 1-octene were copolymerized as follows using an olefin polymerization catalyst including the compound of chemical formula A prepared in the Preparation Example 1.

First, a hexane solvent (1 L) and 1-octene (45 g) were added to a 2L autoclave reactor, and the temperature of the reactor was preheated to 70 °C. Next, the transition metal compound (4 x 10-6M) of chemical formula 2 of the Preparation Example 1 treated with a triisobutylaluminum compound was placed in a catalyst storage tank, and then inputted to a reactor by putting high pressure argon, and 2.4 x 10⁻⁵ M of dimethylanilinium tetrakis (pentafluorophenyl) borate cocatalyst was put into the reactor by putting high pressure argon.

After the ethylene gas was injected while controlling the ethylene pressure so that the total pressure in the reactor was maintained at 30 bar, the polymerization reaction was performed for 5 minutes. During the polymerization reaction, the heat of reaction was removed through a cooling coil inside the reactor to maintain the polymerization temperature as constant as possible at 90 °C.

After the polymerization reaction, the remaining gas was removed and the polymer solution was discharged to the bottom of the reactor, and then cooling was performed by adding excess ethanol to induce precipitation. The obtained polymer was washed 2-3 times with ethanol and acetone, respectively, and then it was dried in a vacuum oven at 80 °C for 12 hours or more to obtain a [ethylene]-[1-octene] copolymer.

In the above, embodiments belonging to the spirit of the invention have been described in detail with reference to the illustrated chemical structural formulas and preparation examples. However, the spirit of the invention is not limited to the illustrated chemical structural formulas and preparation examples, and the spirit of the invention may be variously modified based on the illustrated chemical structural formulas and preparation examples. The illustrated chemical structural formulas, preparation examples, and the like are provided to completely inform a person of ordinary skill in the art to which the invention pertains on the scope of the spirit of the invention, and the scope of rights of the spirit of the invention is only defined by the scope of the claims. Therefore, it should be understood that the embodiments described above are illustrative in all respects and not restrictive.

## Claims

1. A transition metal compound for an olefin polymerization catalyst represented by the following chemical formula 1. 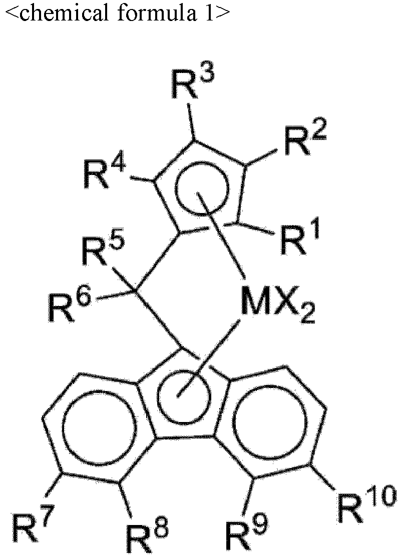 (In the chemical formula 1,
M is titanium (Ti), zirconium (Zr) or hafnium (Hf),
X is each independently halogen, C₁₋₂₀ alkyl, C₂₋₂₀ alkenyl, C₂₋₂₀ alkynyl, C₆₋₂₀ aryl, C₁₋₂₀ alkyl C₆₋₂₀ aryl, C₆₋₂₀ aryl C₁₋₂₀ alkyl, C₁₋₂₀ alkylamido, C₆₋₂₀ arylamido or C₁₋₂₀ alkylidene,
R¹ to R⁴ are each independently hydrogen, C₁₋₂₀ alkyl, C₂₋₂₀ alkenyl, C₂₋₂₀ alkynyl, C₆₋₂₀ aryl, C₁₋₂₀ alkyl C₆₋₂₀ aryl, C₆₋₂₀ aryl C₁₋₂₀ alkyl, C₁₋₂₀ alkylamido, C₆₋₂₀ arylamido or C₁₋₂₀ alkylidene,
R⁵ and R⁶ are each independently C₁₋₂₀ alkyl, C₂₋₂₀ alkenyl, C₂₋₂₀ alkynyl, C₆₋₂₀ aryl, C₁₋₂₀ alkyl C₆₋₂₀ aryl, C₆₋₂₀ aryl C₁₋₂₀ alkyl, C₁₋₂₀ alkylamido, C₆₋₂₀ arylamido or C₁₋₂₀ alkylidene, or linked to each other to form a substituted or unsubstituted C₄₋₂₀ ring,
R⁷ to R¹⁰ form a substituted or unsubstituted C₄₋₂₀ ring, in which two adjacent ones are linked to each other)

2. The transition metal compound for an olefin polymerization catalyst of claim 1,
wherein the X is each independently halogen or C₁₋₂₀ alkyl,
wherein the R¹ to R⁴ are each hydrogen,
wherein the R⁵ and R⁶ are each independently C₁₋₂₀ alkyl or C₆₋₂₀ aryl, or linked to each other to form a substituted or unsubstituted aliphatic C₄₋₂₀ ring,
wherein the R⁷ to R¹⁰ form a substituted or unsubstituted aromatic C₅₋₂₀ ring, in which two adjacent ones are linked to each other.

3. The transition metal compound for an olefin polymerization catalyst of claim 2,
wherein the R⁵ and R⁶ are each independently methyl or phenyl, or linked to each other to form an aliphatic C₄ ring.

4. The transition metal compound for an olefin polymerization catalyst of claim 2,
wherein the R⁷ to R¹⁰ form a substituted or unsubstituted aromatic C₆ or C₁₀ ring, in which two adjacent ones are linked to each other.

5. The transition metal compound for an olefin polymerization catalyst of claim 4,
wherein the aromatic C₆ or C₁₀ ring is substituted with one or more of hydrogen, halogen, C₆₋₂₀ aryl, C₁₋₂₀ alkylsilyl, C₁₋₂₀ alkyloxy and C₁₋₂₀ alkylamino.

6. The transition metal compound for an olefin polymerization catalyst of claim 3 or 5,
wherein the chemical formula 1 is at least one of the following chemical formulas 1-1 to 1-12. 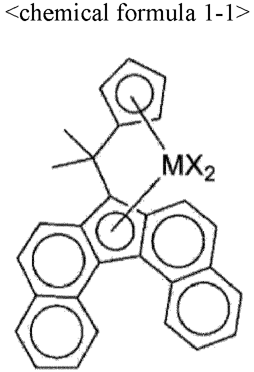 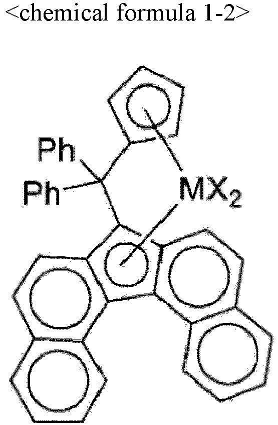 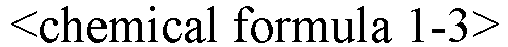 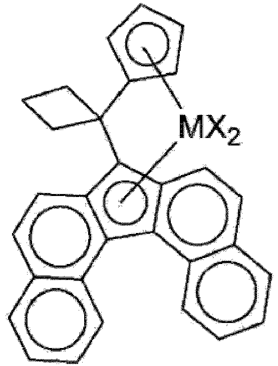 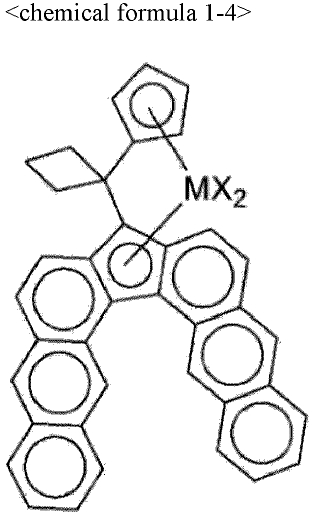 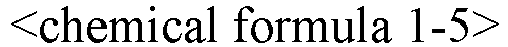 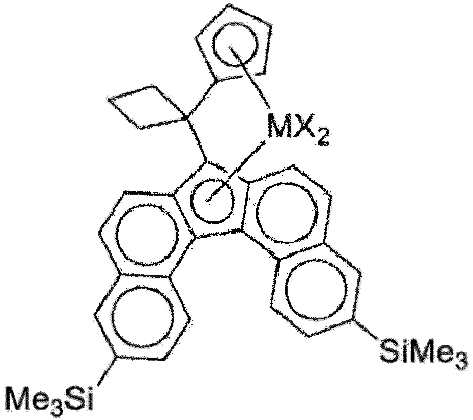 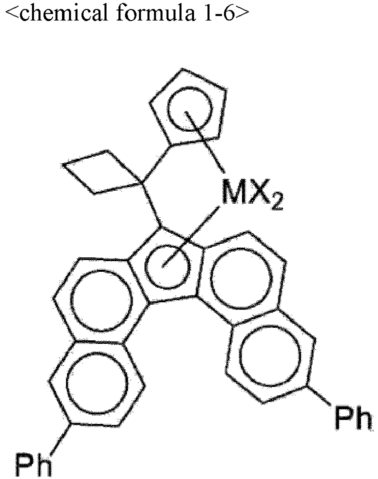 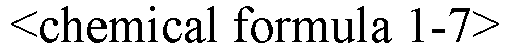 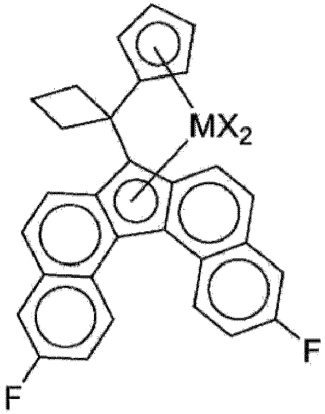 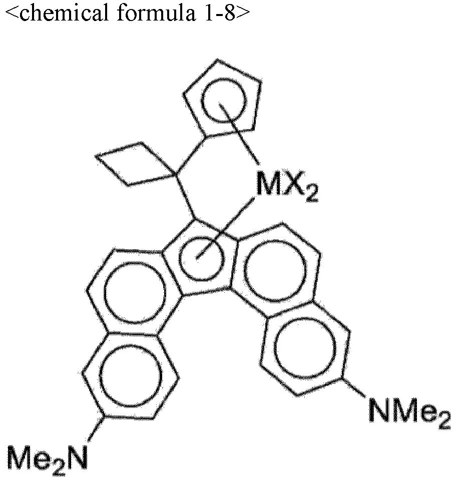 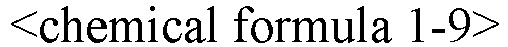 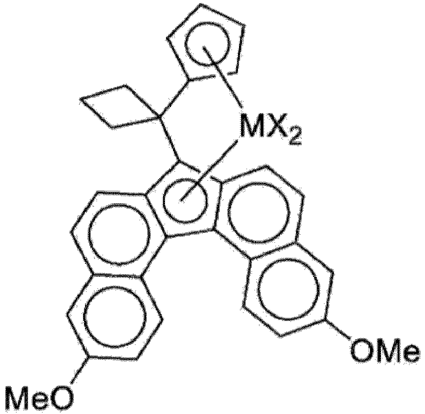 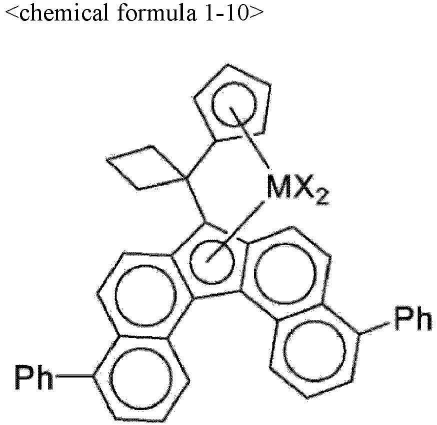 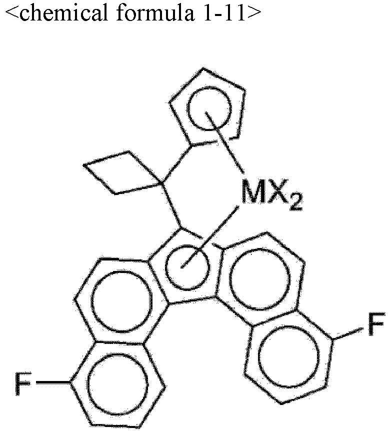 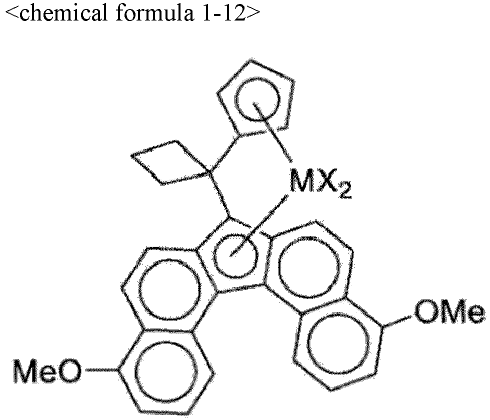 (In the chemical formulas 1-1 to 1-12,
M is zirconium or hafnium,
X is each independently halogen or C₁₋₂₀ alkyl)

7. The transition metal compound for an olefin polymerization catalyst of claim 6, the chemical formula 1 is at least one of the following chemical formulas A to D.

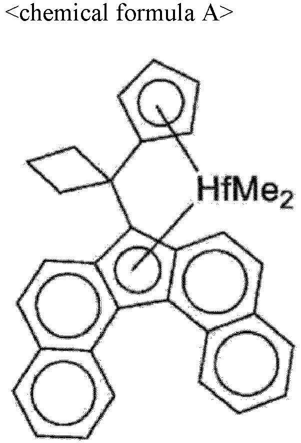

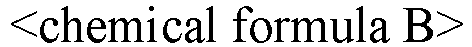

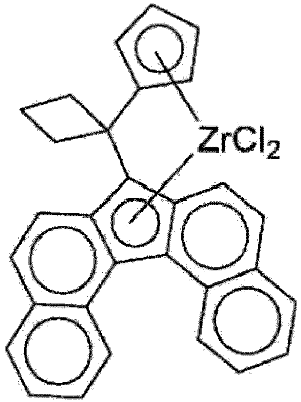

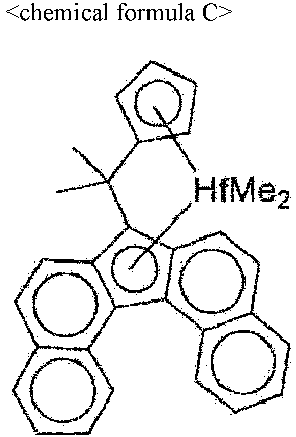

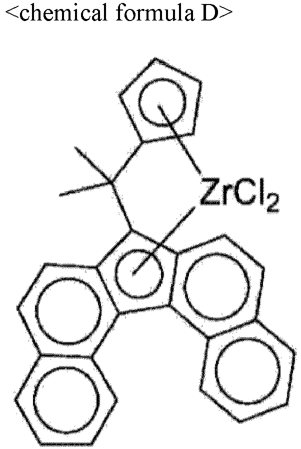

8. An olefin polymerization catalyst comprising:
a transition metal compound represented by the following chemical formula 1; and
a cocatalyst compound. 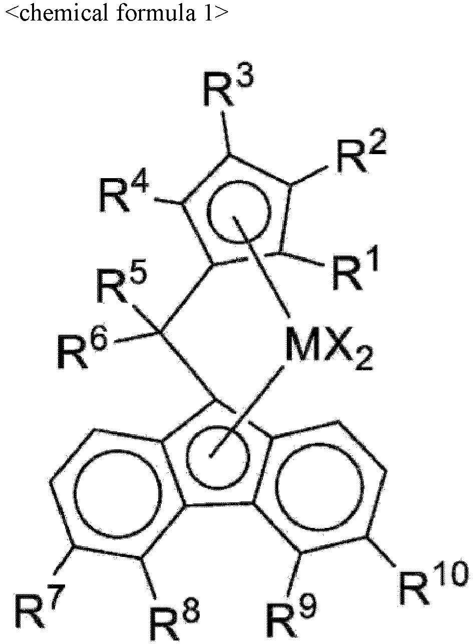 (In the chemical formula 1,
M is titanium (Ti), zirconium (Zr) or hafnium (Hf),
X is each independently halogen, C₁₋₂₀ alkyl, C₂₋₂₀ alkenyl, C₂₋₂₀ alkynyl, C₆₋₂₀ aryl, C₁₋₂₀ alkyl C₆₋₂₀ aryl, C₆₋₂₀ aryl C₁₋₂₀ alkyl, C₁₋₂₀ alkylamido, C₆₋₂₀ arylamido or C₁₋₂₀ alkylidene,
R¹ to R⁴ are each independently hydrogen, C₁₋₂₀ alkyl, C₂₋₂₀ alkenyl, C₂₋₂₀ alkynyl, C₆₋₂₀ aryl, C₁₋₂₀ alkyl C₆₋₂₀ aryl, C₆₋₂₀ aryl C₁₋₂₀ alkyl, C₁₋₂₀ alkylamido, C₆₋₂₀ arylamido or C₁₋₂₀ alkylidene,
R⁵ and R⁶ are each independently C₁₋₂₀ alkyl, C₂₋₂₀ alkenyl, C₂₋₂₀ alkynyl, C₆₋₂₀ aryl, C₁₋₂₀ alkyl C₆₋₂₀ aryl, C₆₋₂₀ aryl C₁₋₂₀ alkyl, C₁₋₂₀ alkylamido, C₆₋₂₀ arylamido or C₁₋₂₀ alkylidene, or linked to each other to form a substituted or unsubstituted C₄₋₂₀ ring,
R⁷ to R¹⁰ form a substituted or unsubstituted C₄₋₂₀ ring, in which two adjacent ones are linked to each other)

9. The olefin polymerization catalyst of claim 8,
wherein the X is each independently halogen or C₁₋₂₀ alkyl,
wherein the R¹ to R⁴ are each hydrogen,
wherein the R⁵ and R⁶ are each independently methyl or phenyl, or linked to each other to form an aliphatic C₄ ring,
wherein the R⁷ to R¹⁰ form a substituted or unsubstituted aromatic C₆ or C₁₀ ring, in which two adjacent ones are linked to each other.

10. The olefin polymerization catalyst of claim 9,
wherein the chemical formula 1 is at least one of the following chemical formulas 1-1 to 1-12. 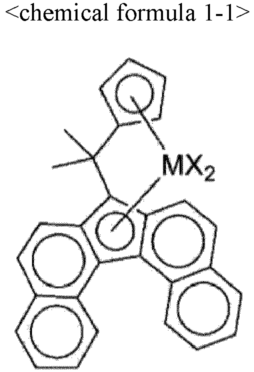 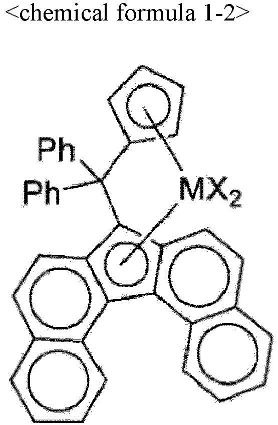 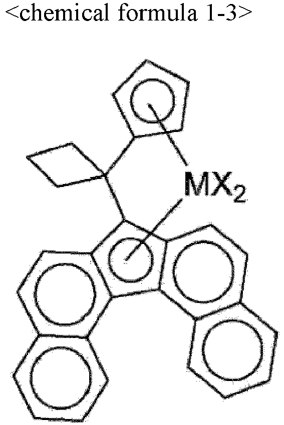 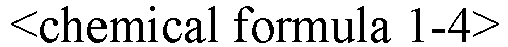 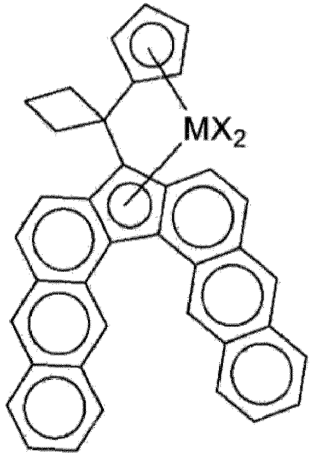 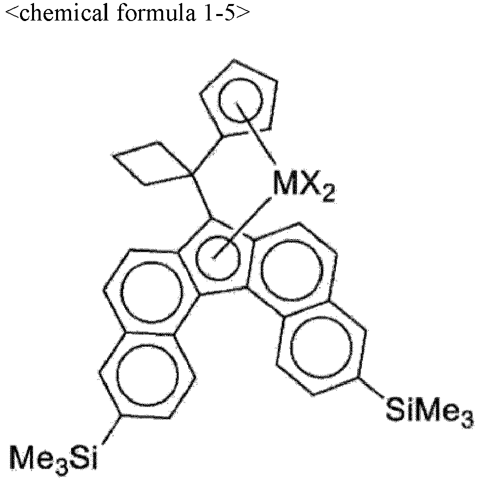 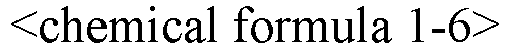 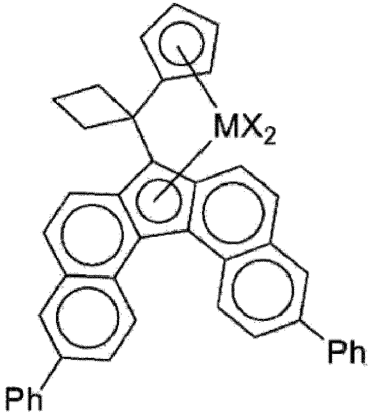 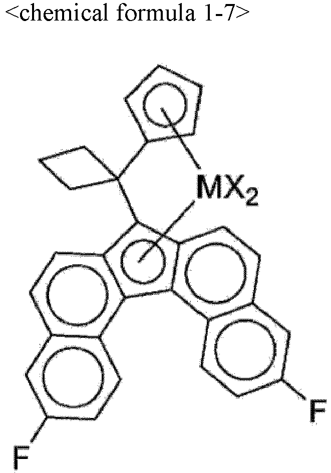 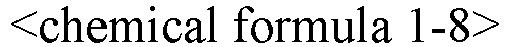 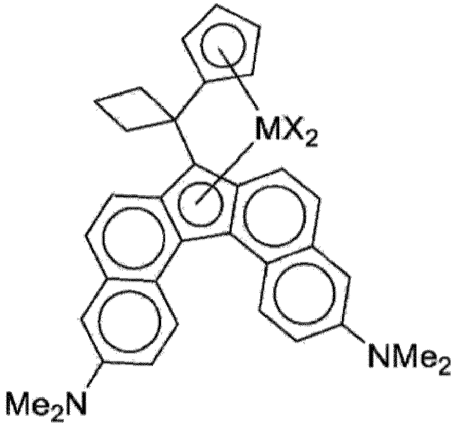 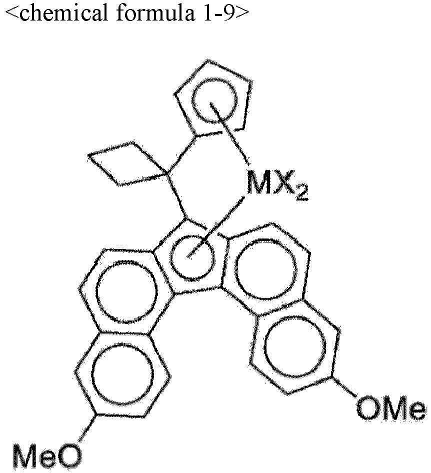 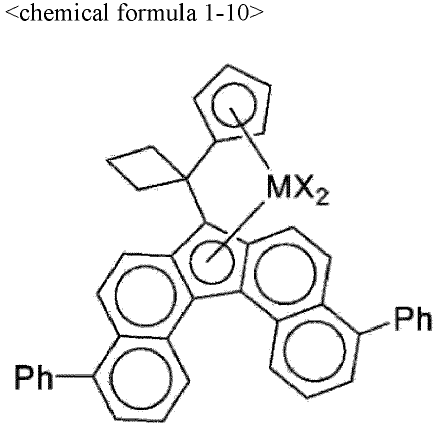 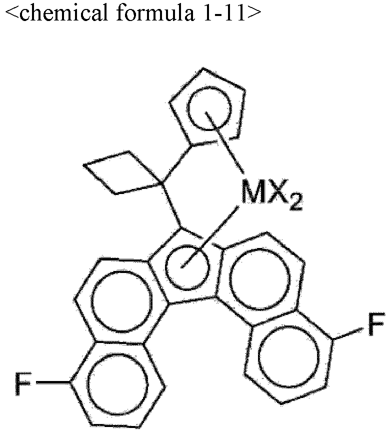 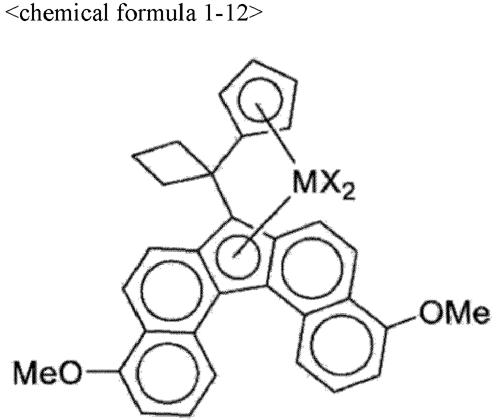 (In the chemical formulas 1-1 to 1-12,
M is zirconium or hafnium,
X is each independently halogen or C₁₋₂₀ alkyl)

11. The olefin polymerization catalyst of claim 8,
wherein the cocatalyst compound comprises at least one of a compound represented by the following chemical formula I, a compound represented by the following chemical formula II and a compound represented by the following chemical formula III. 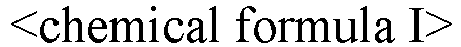 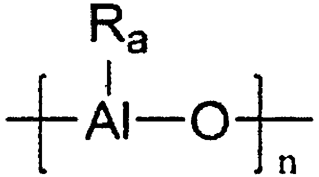 (In the chemical formula A, n is an integer of 2 or more,
Rₐ is a halogen atom, a C₁₋₂₀ hydrocarbon group or a C₁₋₂₀ hydrocarbon group substituted with halogen) 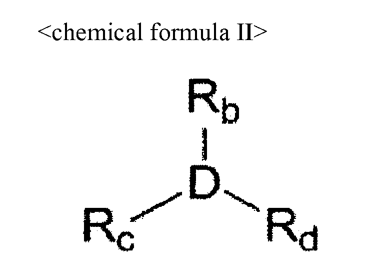 (In the chemical formula B, D is aluminum (Al) or boron (B),
R_{b}, R_{c} and R_{d} are each independently a halogen atom, a C₁₋₂₀ hydrocarbon group, a C₁₋₂₀ hydrocarbon group substituted with halogen or a C₁₋₂₀ alkoxy group)
<chemical formula III> [L-H]⁺[Z(A)₄]⁻ or [L]⁺[Z(A)₄]⁻
(In the chemical formula C, L is a neutral or cationic Lewis base,
[L-H]⁺ and [L]⁺ are Brønsted acids,
Z is a group 13 element,
A is each independently a substituted or unsubstituted C₆₋₂₀ aryl group or a substituted or unsubstituted C₁₋₂₀ alkyl group)

12. A polyolefin formed by polymerizing an olefin-based monomer under the olefin polymerization catalyst according to any one of claims 8 to 11.
